# EUROPEAN PATENT APPLICATION

(11) **EP 1 712 599 A1**
(43) Date of publication of application: **18.10.2006**
(21) Application number: 05075882.0
(22) Date of filing: 14.04.2005
(51) Int. Cl.: C09D 4/00, C08F 283/00, C08F 2/38

(54) **Coating composition comprising an unsaturated hydroxydiester with superior outdoor durability**

(71) Applicant: Hexion Specialty Chemicals Research Belgium S.A., 1348 Ottignies Louvain la Neuve (BE)
(72) Inventor: Fonzé, Annie Bernadette Michèle Ghyslaine, 1348 Ottignies Louvain-la-Neuve (BE); Henry, Nathalie Solange Jeanne Yvette, 1348 Ottignies Louvain-la-Neuve (BE); Heymans, Denis Marie Charles, 1348 Ottignies Louvain-la-Neuve (BE); Uytterhoeven, Griet, 1348 Ottignies Louvain-la-Neuve (BE)

(57) **Abstract**

A resin composition specially adapted for use as a top coat with superior outdoordurability of the cured composition comprising an unsaturated hydroxyalkyldiester. The thermosetting resins are prepared from a radical copolymerisation of an unsaturated hydroxyalkyl diester and acrylic or methacrylic and vinyl monomers, the resins are curable with a curative which react with the hydroxyl functionality. More particularly this invention relates composition of a resin prepared by radical polymerisation of alkyl, hydroxyalkyl diester maleate monomers.

## Description

The present invention relates to a resin composition specially adapted for use as top coat with superior outdoordurability of the cured composition comprising an unsaturated hydroxyalkyldiester. The thermosetting resins of this invention are prepared from a radical copolymerisation of an unsaturated hydroxyalkyldiester and acrylic and/or methacrylic and/or vinyl monomers. The resins are curable with a curative which react with the hydroxyl functionality. More particularly this invention relates to a composition of a resin prepared by radical polymerisation of alkyl, hydroxyalkyl diester maleate monomers.

Coating compositions which may meet the presently required properties of the modern automotive painting industry have been proposed over the past decade. The resistance to the more and more aggressive outdoor exposure of coatings such as the ones applied on automotive have been improved. Systems with very high resistance have been proposed such as compositions based on fluoroalkyl oligomers these systems are certainly seen as the best system in terms of resistance to exterior exposure and the degradation of the coating. However, the other coating requirements such as hardness, over-coatability, cost of the monomers and the higher environmental contribution of such composition due to the presence of the fluorine in the resin composition have limited the use of these systems.
Other options have been developed by incorporation of hydrophobic bulky alkyl esters unsaturated monomers, such as the coating compositions described in WO 02/066529. The drawback of such a composition is that the hardness of the cured film could only be achieved by incorporation of a high level of so called hard monomer such as styrene. Compositions based on the above have good hardness and acid resistance but medium resistance to Ultra-Violet(UV)degradation during exterior exposure of the coated article.

From said cited publications it can be derived that the prior art solutions suffer from disadvantages such as combination of expensive monomers, or deterioration of the other required properties for paint applications.
Therefore an object of the present invention was a new coating composition that could fulfil the future VOC legal European regulations and in addition show excellent outdoordurability and economically / environmentally acceptable coating composition. The term "outdoordurability resistance" used in the present invention has to be seen as a combination of resistance to UV degradation and/or resistance to acid fluids and organic medium (such as oil based-fuel or renewable based-fuel such as alkyl esters of natural-oil).

As result of extensive research and experimentation, it has now surprisingly been found that incorporation of alkyl, hydroxyalkyl diester maleate monomers by radical polymerisation with other unsaturated monomers leads to curable coating composition that meet the current automotive requirements and has improved outdoordurability such as defined above.

A composition for coating application based on hydroxyalkyl unsaturated ester was already described in US-3,414,635 or GB-1,168,078 on said document the authors concluded in col 4, lines 51-53 (of US-,635) that the hydroxylaklyl alkyl maleate diesters are more difficult to polymerise with acrylic monomers.

Surprisingly , it has been found now that a hydroxyl functional resin can be produced starting from the reaction product of an unsaturated 1-2,diacid or anhydride or a mixture thereof and an alcohol and the subsequent reaction of the intermediate monoester of the unsaturated diacid (or anhydride) with an mono-epoxy compound and optionally in the presence of a catalyst known in the art for acid-epoxy reaction. The unsaturated asymmetric hydroxyl functional diester is further used as co-monomer to produce the said hydroxyl functional resins with a high degree of conversion of the above diester. The intermediate monoester of the unsaturated diacid (or anhydride) could be used as co-monomer and polymerized with unsaturated monomer to produce a resin which is further reacted with mono-epoxy compound.
The preferred unsaturated diacids or anhydrides are maleic acid or anhydride or citraconic acid or anhydride or a mixture of maleic and citraconic acid or anhydride. The most preferred is maleic anhydride.
The half ester of the diacid or anhydride are preferably derived from secondary alcohol with alkyl chain (linear, branched, cyclic) with 3 to 20 carbon atoms and preferably with 3 to 16 carbon atoms. Particulary suitable alcohols are: iso-propanol, sec-butanol, methyl isobutyl carbinol, di-iso-butyl carbinol, tridecyl/isodecyl alcohol, isobornyl alcohol, cyclohexanol, 3,3,5 trimethyl cyclohexanol, tetrahydrofurfuryl alcohol , propylene glycol, or a mixture thereof.
Any suitable monoepoxy compound can be used in the reaction with the half ester derived from the condensation of the anhydride or acid and any of the above cited alcohols. Any alkyl or aryl monoglycidyl ethers or alkyl glycidyl esters can be reacted with the acid group of the half ester. Preferably alkyl glycidyl esters are used, which correspond to the general formula (I), 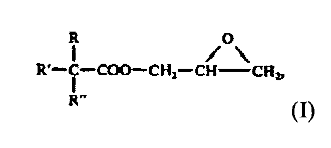 in which R,R',R" are independently hydrogen or aliphatic alkyl radicals of 1 to 10 carbon atoms, while the total number of carbon atoms of the three radicals (R+R'+R")being between 1 to 20, preferably between 3 to 13. These alkyl glycidyl esters are derived for example from 1-methylpropionic acid, 1-dimethyl-propionic acid (pivalic acid), iso-butyric acid, 1-methyl-propionic acid, 1-methyl-butyric acid, 1-dimethyl-butyric acid, VERSATIC acid, neodecanoic glycidyl ester and other glycidyl ester of alkanoic acids and mixture thereof and the like. The most preferred glycigyl ester is CARDURA E10P glycidyl ester, which derived from VERSATIC 10 carboxylic acid (CARDURA & VERSATIC are trademarks from Resolution Performance Products). The said glycidyl esters are obtainable by a well established manufacturing process such as disclosed in EP 1 115 714 B1.
Optionally a catalyst well known in the art for the acid-epoxy reaction can be used.
The resulting unsaturated hydroxyl functional asymmetric diester, can be used without any additional purification step, before the copolymerisation as monomer according to the following process. We have found that if 70 to 100 weight percent of the unsaturated hydroxyl functional asymmetric diester is charged in the reactor and that the other co-monomers (added as a mixture or as independent feed) are subsequently added then high conversion level of the said diester is achieved.
The co-monomer may be chosen from aromatic vinyl monomers, preferably styrene also, including substituted styrene such as alpha-substituted vinyl aromatic compounds including vinyl toluene, alpha-methylstyrene and the like. Beta substituted styrene compounds can also be used, such as stylbene, beta-methylstylbene, and the like.

Another class of suitable vinyl monomers are alpha-olefins with a carbon chain length of more than 10 and preferably those with 10 to 25 carbon atoms.
Vinyl ethers which contain alkyl, aryl or cycloaliphatic groups with a carbon chain length 5 to 15 and preferably from 5 to 10.
Vinyl esters such as vinyl acetate, benzoate and Versatate (e.g. VEOVA 10 or VEOVA 9) vinyl esters (VEOVA is a trademark ex RPP) and the like are suitable co-monomers to be used in the process of this invention.

Alkyl acrylate and/or an alkyl methacrylate, contains an alkyl group having from 1 to 12 carbon atoms, and preferably from 1 to 10 carbon atoms. Particularly suitable monomers of the group are selected from methyl-, ethyl-, propyl-, isopropyl, n-butyl, iso-butyl, isobornyl esters of acrylic acid or methacrylic acid.
More preferred are methyl acrylate or methyl methacrylate, ethyl acrylate, ethyl methacrylate, n-butyl acrylate or n-butyl methacrylate.
Other suitable monomers are selected from hydroxy ethyl acrylate, hydroxy ethyl methacrylate, hydroxy n-propyl acrylate, hydroxy n-propyl methacrylate, hydroxy isopropyl acrylate, hydroxy isopropyl methacrylate, hydroxy n-butyl acrylate, hydroxy n-butyl methacrylate, hydroxy isobutyl acrylate or hydroxy isobutyl methacrylate.
Other alkyl deficient monomers, such as symmetric unsaturated diesters e.g. alkyl maleate, alkyl fumarate, and the like could be part of the co-monomer mixture.

Suitable polymerization initiators to be used for free radical copolymerization include any of the conventional free radical forming compounds, individually or in a mixture. Examples of such compounds are aliphatic azo compounds, diacyl peroxides, peroxy-dicarbonates, alkyl per-esters, alkyl hydroperoxides, per ketals, dialkyl peroxides or ketone peroxides.
Dialkyl peroxides, such as di-tert-butyl peroxide, di-tert-amyl peroxide, and alkyl per esters such as tert-butyl peroxy-2-ethylhexanoate or tert-amyl peroxy-2-ethylhexanoate are preferred.
The concentration of initiator is used in the range of from 1 to 8 wt% and preferably of from 2 to 6 wt%, based on the total mass of the co-monomers.
According to the present invention, the hydroxyl functional asymmetric alkyl unsaturated diester is typically produced by reacting the anhydride with an equimolar ratio of an above described alcohol at a temperature of 80°C to 130°C and preferably in the range of 90°C to 110°C. The residual unreacted anhydride is transformed in di-acid or half ester by means of addition of water or preferably a primary alcohol, such as methanol. The resulting half ester is subsequently reacted with an epoxy compound as listed above at a temperature 80°C to 130°C and preferably in the range of 90°C to 110°C with optionally 0.05 to 1.0 weight percent of an acid-epoxy reaction catalyst such as stannous octoate type catalyst (e.g. DABCO T9).
The hydroxyl functional resins are prepared by addition of a monomer mixture which contains at least 5 to 40 weight percent of an aromatic vinyl monomer or vinyl ether or vinyl ester or a mixture of those vinyl monomers to the hydroxyl functional asymmetric alkyl unsaturated diester. The co-monomer mixture may also contain acrylic or methacrylic or symmetric diester of maleate monomers as listed above.
The polymerization reaction is carried out at a temperature of 110°C to 170° and preferably at 140 °C to 160°C for 5 to 8 hours and preferably 3 to 7 hours. The preferred radical polymerisation initiators are peroxy ethers and used in the range of from 1 to 8 wt% and preferably of from 2 to 6 wt%, based on the total mass of monomers. The most preferred, for low colour produced resin is di-tert-amyl peroxide and used in the range of from 1 to 8 wt% and preferably of from 2 to 6 wt%, based on the total mass of monomers. The radical polymerisation initiator, as well known in the art, is added in at least two stages or gradually.
The hydroxyl functional resins prepared according to the above process are characterised by a residual concentration of the hydroxyl functional asymmetric alkyl unsaturated diester lower than 12 percent by weight of the initial charge of the diester.
The copolymerization can be carried out in bulk or in a solution of the co-monomers in an inert solvent, e.g. in amounts of from 0 to 40 weight %, preferably from 5 to 25 weight %. Suitable inert solvents that can be used are well know by the skilled person in the art such as alkyl acetates such as butylacetate, alkyl aromatics such as xylene or a mixture thereof.
Suitable cross-linking agents to be applied in the coating compositions of the present invention can be selected in general from blocked isocyanate groups containing compounds. Polyisocyanate may be aliphatic, cycloaliphatic, or heterocyclic and may be substituted or unsubstituted. For curing above 100°C the polyisocyanate is preferably a fully-capped (blocked) polyisocyanate with substantially no free isocyanate groups. The polyisocyanate is preferably aliphatic. Diisocyanates are preferred, although higher polyisocyanates can be used in place of or in combination with diisocyanates. Suitable isocyanates for curing at room temperature are described in "Polyurethanes for coating" (Ed. By Dr. Ulrich Zorll,author Dr. Manfred Bock; pages 109 to 150). The cross-linking reaction can be catalyzed by addition of an organometallic compound, such as tin compounds, and if desired tertiary amines, preferably diethyl ethanol amine. Examples of appropriate tin compounds are di-butyl tin dilaurate, di-butyl tin acetate and di-butyl oxo-tin.
Other types of hereinbefore specified cross-linking agents can be formaldehyde adducts derived from urea, melamine and benzoguanamine, or the etherified formaldehyde-amine adducts.

Preferred cross-linking agents for the formaldehyde adducts are the melamine-formaldehyde adducts partially or completely etherified with aliphatic alcohols having 1 to 4 carbon atoms. Examples of such commercially available curing agents are: MAPRENAL MF900, VMF3296 and CYMEL 303, 327 and 1158 curing agents (MAPRENAL, VMF and CYMEL are trademarks). The above cross-linking reaction can be catalyzed by addition of an strong acid, such as phosphoric acid, para toluenesulfonic acid and the like.

More preferred embodiments of said coating compositions are those, comprising copolymers obtainable from
(i) 5 to 50 weight % of the unsaturated hydroxydiester of this invention,
(ii) 5 to 45 weight % of a vinyl monomer,
(iii) 0 to 30 weight % of acrylic or methacrylic esters and symmetric diester of maleate or fumarate monomers,
(iv) 1 to 8 weight % of a radical polymerisation initiator,
(v) optionally an inert organic solvent.

Preferred hydroxyl containing copolymers have an average molecular weight(Mₙ) from 1,000 to 5,000.

It will be appreciated that another aspect of the present invention is formed by the hydroxyl containing copolymer to be used in coating compositions, which provide high outdoordurability of the said coating, while maintaining other relevant physical properties such as hardness, MEK resistance, VOC flexibility, scratch resistance of coating films after curing.
Another aspect of the present invention is formed by the cured coating films derived from the hereinbefore defined coating compositions and applied on a shaped substrate, on metal shaped substrates and more in particular on automotives.

### Test description and analytical methods:

Acid value: according to ISO 3682-96
UV degradation test: ASTM D4587 QUV A method B
The pendulum hardness test ISO 1522-73 is used.

### Molecular weight determination:

*General:* General information on liquid exclusion chromatography can be obtained from ASTM D3016; standard practice for use of liquid exclusion chromatography terms and relationships.

*For the correlation, the following standars are used:*
polystyrene standards, covering the relative molecular mass range from about 5000 to 3000000 the following Toya Soda standars are recommended: A-5000, F-1, F-2, F-4, F-10, F-20, F-40, F-80, F128, F-288 and 1-phenylhexane.
Samples were dissolved in THF. Mn, Mw, Peak and Mwd are quoted.
Solids content: according to ASTM D2369-92
Volatile organic content (VOC): according to ASTM D 3960-96
Gloss of the coatings: ISO 2813-94 E.
Pendulum damping test (Koenig hardness): according to
ISO 1522-73(E) or DIN 53 157

### Resistance of coatings against acid, method summary:

The acid resistance is determined by exposing the film to droplets of 0.6N sulphuric acid for 30, 60 and 90 minutes at 50°C and assessing the resulting damage to the film. Minimum score (per spot) is 0 (very poor), maximum score is 10 (not affected), and the three scores are then added together. The acid resistance was measured on coatings cured at room temperature and cured at 60°C for 30 minutes.

### MEK resistance (MEK) Summary of the method:

A piece of cotton wool, soaked with MEK, is rubbed over the coating (using a pressure of around 2 kg). If the coating surface has been rubbed one hundred times up and down without showing any damage, the coating is said to be fully cured. If, after x "double MEK rubs", the coating has been destroyed on a full line going from the top to the bottom of the panel, the coating is said to fail after x "double MEK rubs". The MEK resistance was measured on coatings cured at room temperature and cured at 60°C for 30 minutes.
Measurement of the resistance to cracking-rapid deformation (Impact test /Kugelschlagprufung/ Falling Weight test): according to ISO 6272-93(E).
Measurement of resistance to cracking-gradual deformation (Erichsen Slow Penetration test or Cupping test)
According to: ISO 1520-73(E)
Viscosity of Newtonian systems using a Brookfield viscometer: ISO 2555-89.

The invention is illustrated in more detail in the following examples, however without restricting its scope to these specific embodiments. All percentages are contents by mass weight and all parts are parts by mass weight, unless expressly stated otherwise.

### EXAMPLES

### Synthesis of the asymmetric hydroxyl functional diester maleate derivatives.

### Example 1 TMCH diester

Equipment: Glass reactor equipped with an anchor stirrer, reflux condenser and nitrogen flush.

### Manufacturing procedure:

Maleic anhydride was reacted with 3,3,5 trimethyl cyclohexanol (TMCH) in an equimolar ratio at a temperature between 90 and 110°C, to form a maleate monoester in presence and 5 wt% of butyl acetate. The reaction was continued until conversion of the anhydride had reached at least 90 mole% (Conversion of the anhydride is monitored by acid-base titration).Methanol was added to open the remaining anhydride in a 1.2/1 molar ratio of methanol/anhydride and the reaction was continued for 30 minutes.

CARDURA E10P was fed to the reactor over a period of 30 minutes. CARDURA E10P glycidyl ester was added in an equimolar ratio to the remaining acid in the obtained reaction mixture whilst keeping the temperature at 110°C. The reaction mixture was then additionally kept until required conversion is achieved.

### Example 2 IPA diester

Maleic anhydride was reacted with isopropyl alcohol(IPA) in a ratio MA/IPA 1/1.2 at 90 - 110°C to form a maleate monoester in presence of 2.1 wt % butyl acetate. The reaction was continued until conversion of the anhydride had reached at least 90 mole% (Conversion of the anhydride is monitored by acid-base titration).Methanol was added to open the remaining anhydride in a 1.2/1 molar ratio of methanol/anhydride and the reaction was continued for 30 minutes. Excess of IPA was then removed via distillation.

CARDURA E10P was fed to the reactor over a period of 30 minutes. CARDURA E10P was added in an equimolar ratio to the remaining acid in the system whilst keeping the temperature between 90 and 100°C. The system was then hold further at 105°C for 105 minutes.

### Synthesis of the hydroxyl functional resins

### Example 3 TMCH resin

### Composition: see Table 1,

Maleate diester used is described in Example 1.

Equipment: Glass reactor equipped with an anchor stirrer, reflux condenser and nitrogen flush.

### Manufacturing procedure:

The reactor was flushed with nitrogen and the initial reactor charge was heated to the polymerization temperature of 150°C. This first charge of Di ter-butylperoxide was then added in one shot. Immediately after this addition, the monomers-initiator mixture was dosed continuously to the reactor in 330 minutes at the same temperature. The monomer addition feed rate was halved during the last hour of monomer addition. After completion of the monomer addition, the third charge of Di ter-butylperoxide was then fed together with a small amount of the butyl acetate to the reactor in 30 minutes. The reactor was kept at this temperature for 30 more minutes. Finally, the polymer was cooled down and diluted with the remaining butyl acetate.

### Example 4a IPA resin

Maleate diester, used is described in Example 2.

Equipment: Glass reactor equipped with an anchor stirrer, reflux condenser and nitrogen flush.

### Manufacturing procedure:

Same as example 3.
Color,Pt/Co: 166

### Example 4b IPA resin

Maleate diester, used is described in Example 2.

Equipment: Glass reactor equipped with an anchor stirrer, reflux condenser and nitrogen flush.

### Manufacturing procedure:

Same as example 3 except that radical initiator is di-tert-amyl peroxide (DTAP) and that the polymerization temperature was 140°C.
Color,Pt/Co: 64

### COMPARATIVE hydroxyl functional resins

A/ Synthesis of the asymmetric hydroxyl functional diester maleate derivatived from primary alcohol.

### Comparative Example 1

B/ Comparative hydroxyl functional resins

### Composition see Table 2

acrylic polyol resin
MACE resin

Equipment: Glass reactor equipped with an anchor stirrer, reflux condenser and nitrogen flush.

### Manufacturing procedure:

The reactor was flushed with nitrogen and the initial reactor charge was heated to the polymerization temperature (160°C). The remaining monomer-initiator mixture was fed continuously to the reactor in 5 hours at this temperature. The additional initiator was then fed together with a small amount of the butyl acetate to the reactor in 30 minutes. The reactor was kept at this temperature for 30 more minutes. Finally, the polymer was cooled down and diluted with the remaining butyl acetate.

### Comparative Example 2

### Isobornyl acrylate resin

### Process see comparative example 1 and composition see Table 2.

**TABLE 1: Resin composition and properties according to the invention**

| **Example** | | **3** | **4a** | **4b** |
|---|---|---|---|---|
| | | **TMCH** | **IPA** | **IPA** |
| Initial Reactor | | | | |
| Charge | xylene | 4 | 4 | 4 |
| | Maleate diester | 40.7 | 40.7 | 40.7 |
| Initator start | DTBP | 0.4 | 0.4 | - |
| | DTAP | - | - | 0.4 |
| Monomer feed | | | | |
| | Xylene | 7 | 7 | 7 |
| | Hydroxyethyl methacrylate | 20.1 | 20.1 | 20.1 |
| | Styrene | 20 | 20 | 20 |
| | Methyl methacrylate | 19.2 | 19.2 | 19.2 |
| | Di ter butyl peroxide | 3.6 | 3.6 | - |
| | DTAP | - | - | 3.6 |
| Post cook | DTBP | 1 | 1 | - |
| | DTAP | - | - | 1 |
| Butyl acetate | | 40 | 40 | 40 |
| Total intake | | 157.1 | 156 | 156 |
| Solids content | | 64.41 | 65.1 | 64.8 |

| | | | | |
|---|---|---|---|---|
| (Intakes: all expressed in part by weight) | | | | |

**TABLE 2: Comparative examples: resin composition and properties**

| **Comparative Example** | | **1** | **2** |
|---|---|---|---|
| | | **MACE** | **isobornyl** |
| Initial Reactor | Cardura | | |
| Charge | E10P | 30 | 22.3 |
| | xylene | 2.5 | 2.5 |
| | | 0 | 0 |
| Initator start | DTBP | 0.4 | 0.4 |
| Monomer feed | | | |
| | Xylene | 8.5 | 8.5 |
| | Methacrylic acid | 10.7 | 7.9 |
| | Hydroxyethyl methacrylate | 16.0 | 20.1 |
| | Styrene | 22.0 | 20.0 |
| | Methyl methacrylate | 21.3 | 19.2 |
| | iso- bornyl methacrylate | - | 10.5 |
| | DTBP | 3.6 | 3.6 |
| Post cook | DTBP | 1 | 1 |
| Butyl acetate | | 30 | 30 |
| Total intake | | 146.0 | 146.0 |
| Solids content | | 76.2 | 70.5 |

| | | | |
|---|---|---|---|
| (Intakes: all expressed in part by weight) | | | |

### Cured coating compositions

White pigmented lacquers were prepared as explained below and were formulated from the acrylic polymers by the addition of polymer isocyanate curing agent (Desmodur N 3600) in a 1/1 OH/isocyanate ratio and a cure catalyst (Di-butyl tin dilaurate) at a concentration of 0.01%, based on resin and isocyanate content. Solvent, butyl acetate was added to dilute at an applied viscosity of 100 m Pas. The coating properties of the formulations based on the resins according to the invention are reported in Table 3 and in Table 4 for the comparative examples.

### Preparation of the white pigmented resin formulation:

Pour 85% of the total resin amount in a small metal can (which can be branched on the cooling system). Connect the can to the cooling water. Stir at 800 RPM using an automatic dispermat equipped with cooling system and start slowly addition of the pigment (52g pigment for 100g total solid). When the addition is complete, increase the stirring rate to 3000 RPM for 50 minutes.
Take a sample and measure the pigment dispersion with the 'Eggeman jauge'. The value should be below 20 microns. Then add the 15% remaining resin and mix again for 15 min at 3000 RPM. The formulation is placed in a glass bottle for 2 days.

### Application and testing of the paint(resin and curing agent):

Apply the paint on Q 36 aluminium panels with bar coater (n°9) to achieve a thickness of 50 microns.
Cure the panels 30 minutes at 60°C.Before starting any exposure and measurements, need at least to wait 168 hrs, at room temperature, after curing. Two panels per system are put in the Q-UV A weather-o-meter (according to ASTM D4587).

**TABLE 3: Coating properties of the resins according to the invention**

| **Formulation** | **A** | **B** | **C** |
|---|---|---|---|
| **Resin of example** | **3** | **4a** | **4b** |
| On white coat | | | |
| **Initial gloss at 20°** | **90** | **91** | **92** |
| **gloss at 20° after 3736 hours** | **61** | **46** | **53** |
| On clear coat | | | |
| Tack free time, RT, hours | 14.5 | 15 | 12 |
| Koening hard, RT, after 168 hrs, s | 172 | 176 | 177 |
| Direct impact strength, inch.lb | - | 40 | 35 |
| Slow penetration, mm | - | 8.2 | 8.7 |
| MEK resistance, double rubs | >100 | >100 | >100 |
| Acid resistance | 28 | 25 | 25 |

| | | | |
|---|---|---|---|
| of the coating composition as applied at a viscosity of 100 mPas. | | | |

**TABLE 4: Coating properties of the comparative resins**

| **Comparative Formulation** | **D** | **E** |
|---|---|---|
| Resin of Comp. example | 1 | 2 |
| On white coat | | |
| **Initial gloss at 20°** | **85** | **84** |
| **gloss at 20° after 3736 hours** | **10** | **42** |
| On clear coat | | |
| Tack free time, RT, hours | 25 | |
| Koening hard, RT, after 168 hrs, s | 105 | |
| Direct impact strength, inch.lb | - | |
| Slow penetration, mm | - | |
| MEK resistance, double rubs | >100 | |
| Acid resistance | 29 | |

| | | |
|---|---|---|
| of the coating composition as applied at a viscosity of 100 mPas. | | |

## Claims

1. A curable coating composition with superior outdoorability comprising an unsaturated hydroxydiester **characterised in that** it comprises at least the reaction product of an alcohol and unsaturated anhydride or acid, which has been subsequently reacted with a saturated glycidyl ester.

2. The curable coating composition of claim 1, **characterised in that** the unsaturated hydroxydiester is radically copolymerized with a vinyl monomer and ethylenically unsaturated copolymerizable compound and that said copolymer is cross-linked with curative for hydroxyl functionality.

3. The composition of claims 1-2 **characterised in that** the glycidyl ester comprise an alkyl glycidyl ester correspond to the general formula (I), 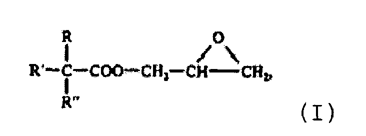 in which R,R',R" are independently hydrogen or aliphatic alkyl radicals of 1 to 10 carbon atoms, the total carbon atoms of the three radicals (R+R'+R")being between 1 to 20, preferably between 3 to 13.

4. The composition of claims 1-3 **characterised in that** the alcohol is mostly a secondary alcohol preferably selected from iso-propanol, sec-butanol, methyl isobutyl carbinol, di-iso-butyl carbinol, tridecyl/isodecyl alcohol, isobornyl alcohol, cyclohexanol, 3,3,5 trimethyl cyclohexanol, tetrahydrofurfuryl alcohol , or a mixture thereof.

5. The composition of claims 1 to 3 **characterized in that** the alcohol is a polyol with one primary alcohol and at least one secondary alcohol.

6. The composition of claims 1-5 **characterised in that** the glycidyl ester is selected from 1-methylpropionic glycidyl ester, 1-dimethyl-propionic glycidyl ester (pivalic glycidyl ester), iso-butyric glycidyl ester, 1-methyl-propionic glycidyl ester, 1-methyl-butyric glycidyl ester, 1-dimethyl-butyric glycidyl ester, Versatic acid glycidyl ester, neodecanoic glycidyl ester and other glycidyl ester of alkanoic acids and mixture thereof.

7. A process to prepare a resin by radical polymerisation comprising:
(i) 5 to 50 weight % of the unsaturated hydroxydiester of claims 3-6,
(ii) 5 to 45 weight % of a vinyl monomer,
(iii) 0 to 30 weight % of acrylic or methacrylic esters and symmetric diester of maleate or fumarate monomers,
(iv) 1 to 8 weight % of a radical polymerisation initiator,
(v) 0 to 40 weight % an inert organic solvent.
**characterised in that** (i) is charged in the reactor at a 70 to 100 weight % of the required quantity before adding the co-monomers (ii),(iii) and the catalyst (iv).

8. The composition of claim 7 where (ii) is a vinyl aromatic, preferably styrene.

9. The composition of claim 7 where (ii) is a vinyl ester of α,α branched carboxylic acid.

10. A coated article comprising a composition of any claims 1-6.
